# EUROPEAN PATENT SPECIFICATION

(11) **EP 3 474 022 B1**
(45) Date of publication and mention of the grant of the patent: **30.11.2022**
(21) Application number: 18201358.1
(22) Date of filing: 18.10.2018
(51) Int. Cl.: G01P 15/125, G01P 21/00, G01M 7/02, G01M 7/08, G01M 7/06

(54) **TEST SYSTEM FOR A VEHICLE EVENT RECORDER PROVIDED WITH AN ACCELEROMETER, AND A METHOD THEREOF**
PRÜFSYSTEM FÜR EINE FAHRZEUGEREIGNISAUFZEICHNUNG MIT EINEM BESCHLEUNIGUNGSMESSER, UND EINES VERFAHREN DESSEN
SYSTÈME DE TEST POUR UN ENREGISTREUR D'ÉVÉNEMENTS DE VÉHICULES DOTÉ D'UN ACCÉLÉROMÈTRE ET PROCÉDÉ ASSOCIÉ

(30) Priority: 18.10.2017 IT 201700117980
(43) Date of publication of application: 24.04.2019
(73) Proprietor: Generali Jeniot S.P.A. Societa' a Socio Unico, 20145 Milano (IT); VIASAT S.p.A., 00156 Roma (IT)
(72) Inventor: BERTAGNA, Massimo, 00156 Roma (IT); BOSCHETTI, Giovanni, 35122 Padova (IT); MATARRESE, Valerio, 20145 Milano (IT); PETRONE, Domenico, 00156 Roma (IT); TREVISANI, Alberto, 35122 Padova (IT)
(74) Representative: Bongiovanni, Simone

(56) References cited:
- US-A- 2 788 654
- US-A- 5 895 858
- US-A1- 2012 203 487

## Description

### CROSS-REFERENCE TO RELATED APPLICATIONS

This application claims priority from Italian Patent Application No. 102017000117980 filed on October 18, 2017.

### TECHNICAL FIELD

The present disclosure relates to a test system for a vehicle event recorder, provided with an accelerometer, and to a test method thereof.

### BACKGROUND ART

Test systems adapted to characterize the accuracy of electronic devices provided with an accelerometer are known. In said test systems, a test acceleration is provided to an electronic device under test (DUT). The characterization of the accuracy of the DUT is primarily based on the fidelity of the reading, by comparing the acceleration read by the DUT accelerometer with the test acceleration, which should ideally coincide with the read acceleration. The accuracy of the DUT is further characterized in terms of repeatability and homogeneity of the reading during repeated tests and in different test conditions. In particular, test systems adapted to characterize the accuracy of electronic devices (DUT) are known, said DUT being configured to identify and record the impact accelerations in the event of a car accident. The DUT comprises at least one accelerometer adapted to detect the occurrence of the impact, and it is configured to run a software adapted to record the accelerations to which the DUT is subject at the impact. In systems of a known type, the DUT and at least one reference accelerometer are mounted inside a vehicle, and the vehicle is subjected to an impact that reproduces the effects of a car accident. As a consequence, both the DUT and the at least one reference accelerometer record a respective acceleration relative to the same impact. The measured acceleration is typically a vector acceleration, i.e. it comprises three components measured according to three orthogonal axes. The accuracy of the recording performed by the DUT is evaluated by comparing the accelerations recorded by the DUT with the accelerations recorded by the at least one reference accelerometer. The reference accelerometer is typically designed and configured so as to record the impact accelerations detected on the three longitudinal, transverse and vertical axes as accurately as possible.

The acceleration recorded by the DUT is generally different from the acceleration recorded by the reference accelerometer, in particular it is less accurate than the one measured by the reference accelerometer; this discrepancy may be due to several reasons: the DUT accelerometer and the reference accelerometer can have different sensitivities or different acquisition frequencies; moreover, different DUT can have different transformation algorithms (i.e. rotory translation from the DUT triaxial reference system - which depends on the orientation with which the DUT is mounted on the vehicle - to the triaxial vehicle reference system), and different crash detection algorithms.

Even more in particular, test systems adapted to characterize the accuracy of electronic devices (DUT) are known, the DUT being configured to record impact accelerations in the event of a car accident, wherein the DUT is mounted in a vehicle subjected to impact by means of a stress system, e.g. a hammer, a ram, or a carriage, which provides kinetic energy to the vehicle, or the vehicle itself is placed on a ramp from which it is released until a fixed barrier or a second vehicle is hit. In this way, the impact acceleration to be recorded is provided to the DUT by physically reproducing the car accident.

Some drawbacks of these known test systems lie in the long test running times, in the excessive size of the area required to perform the test, in the high costs of each test run (as it is necessary to physically damage the vehicle), and in the poor repeatability of the tests (since the impact accelerations, strongly influenced by the structural characteristics of the vehicle and of the stress system, are not easily reproducible even during multiple tests, nor individually controllable on the respective spatial components). Furthermore, if a collision physically damages a vehicle, it is not possible to repeat the test in the same way.

Document US 2 788 654 A discloses an accelerometer testing system configured to calibrate an accelerometer in an improved way.

### DISCLOSURE OF INVENTION

The object of the present invention is to provide a test system for a vehicle event recorder, provided with an accelerometer, and a corresponding test method adapted to overcome the drawbacks of the prior art.

According to the present invention, a combination of a test system for a vehicle event recorder and the vehicle event recorder, provided with an accelerometer, as well as a corresponding test method, as defined in the attached claims are provided.

### BRIEF DESCRIPTION OF THE DRAWINGS

For a better understanding of the present invention, preferred embodiments thereof are now described, purely by way of non-limiting example, with reference to the attached drawings, wherein:
- Figure 1 illustrates an architectural scheme of a test system according to an embodiment of the present invention;
- Figure 2 schematically illustrates a portion of the test system of Figure 1;
- Figure 3 schematically illustrates a detail of the portion of Figure 2;
- Figure 4 schematically illustrates a portion of a test system according to another embodiment of the present invention, said portion being an alternative to the portion of Figure 3;
- Figure 5 illustrates, by means of block diagram, a method for analyzing and extracting data, according to an aspect of the present invention;
- Figure 6 illustrates, by means of a block diagram, a control method, successive to the method of Figure 5, according to an aspect of the present invention; and
- Figure 7 illustrates, by means of block diagram, a test method of a test system according to any one of the embodiments of the present invention.

### BEST MODE FOR CARRYING OUT THE INVENTION

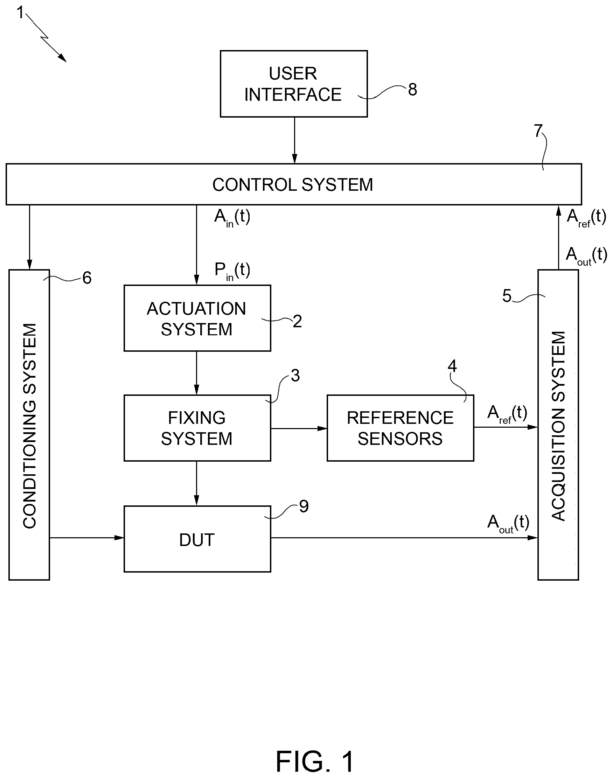

With reference to Figure 1, a block diagram relating to an architectural scheme of a test system 1, according to an embodiment of the present invention is illustrated. The test system 1 is configured to characterize a vehicle event recorder under test (DUT) 9. The DUT 9 is provided with least one acceleration sensor. For example, the DUT 9 comprises a triaxial accelerometer. The triaxial accelerometer of the DUT 9 has its own axis reference system. The DUT 9 is configured to produce an output signal *A*ₒᵤₜ(t) relative to the acceleration sampled in time t by the at least one accelerometer of the DUT 9. The measured acceleration is reorientated according to the conventional axes of the vehicle. The DUT 9 comprises an internal clock, used for associating an instant of time to each sample of the output signal *A*ₒᵤₜ(t).

In particular, the test system 1 is configured to subject the DUT 9 to a known input acceleration profile *A*ᵢₙ(t) and to characterize the accuracy of the DUT 9 by analyzing the output signal *A*ₒᵤₜ(t), as better detailed in the following.

Optionally, the DUT 9 can comprise a localization system, for example based on the global positioning system (GPS). Optionally, the DUT 9 can comprise a telecommunication module, for example based on the general packet radio service (GPRS) technology.

Optionally, the DUT 9 can comprise a memory module for storing the acceleration signals.

Optionally, the DUT 9 can comprise an autonomous power supply module, for example a battery.

The DUT 9 records the acceleration and produces the output signal *A*ₒᵤₜ(t) with a sampling frequency comprised, for example, between 10 Hz and 1000 Hz.

For example, the DUT 9 is an event-data recorder (EDR), or a black box for vehicles, or an airbag control unit.

The test system 1 moreover comprises an actuation system 2, configured to control the position of the DUT 9 in a controlled manner over time. In the following, by way of non-limiting example, an embodiment of the present invention is considered wherein the actuation system 2 is a parallel robot of a known type. Alternatively, the actuation system 2 is, for example, a manipulator or a multiaxial bench. According to an aspect of the present invention, the actuation system 2 controls the position of the DUT 9 over time so as to subject the DUT 9 to a known acceleration profile.

The test system 1 further comprises a fixing system 3, which allows to couple the DUT 9 to the actuation system 2 in a releasable manner. In particular, the fixing system 3 is rigidly connected to the actuation system 2, and the DUT 9 is rigidly connected to the fixing system 3. Even more in particular, the DUT 9 can be fixed in a barycentric position with respect to the fixing system 3 and to the actuation system 2. Accordingly, the accelerations of the actuation system 2 are transmitted, unchanged, to the fixing system 3 and to the DUT 9, without introducing distortions or adding vibrations.

The test system 1 further comprises a control system 7, configured to implement governing and control methods for the test system 1. For example, the control system 7 is an industrial computer, and the governing and control methods for the test system 1 are implemented, for example, by means of software stored in the control system 7. In particular, the control system 7 is configured to receive an input acceleration profile *A*ᵢₙ(t) over time and send, as output a position profile *P*ᵢₙ(t) over time, corresponding to the input acceleration profile *A*ᵢₙ(t), to the actuation system 2, as better detailed in the following. For example, the control system 7 can comprise a database of acceleration profiles; the input acceleration profile *A*ᵢₙ(t) can therefore be selected from said database. According to an aspect of the present invention, the input acceleration profile *A*ᵢₙ(t) is for example an acceleration profile of a vehicle recorded at impact caused by a road accident. In said case, the database of the acceleration profiles comprised in the control system 7 can be categorized by type and/or model of the vehicle whose acceleration, acceleration peak, impact speed, acceleration point, impact direction (e.g. rear, front, side, angled, with or without vertical component), type of structural element affected by the impact (e.g. impact with a practically non-deformable element, such as a wall, or deformable, such as another vehicle) has been recorded. It is also possible to categorize the database based on the type and/or model of all vehicles involved in the impact.

The test system 1 further comprises a user interface 8, operatively coupled to the control system 7. For example, the user interface 8 allows a user of the test system 1 to send control signals to the control system 7. For example, running a test is possible. For example, it is possible to select the input acceleration profile *A*ᵢₙ(t) to be used for the test. For example, it is possible to perform a series of tests in an automatic manner by selecting a list of input acceleration profiles to be used for tests which are successively performed with one another over time, or by repeating the same test several times over time. For example, it is also possible to indicate pause time intervals between successive tests or between successive series of tests. For example, it is possible to indicate a duration of the test or of the series of tests. In an embodiment of the present invention, the user interface 8 allows to display the test results. For example, the user interface 8 is a console provided with a touch screen.

The user interface 8 also allows to send control signals to the control system 7, adapted to perform diagnostic and/or configuration interventions of control parameters of the subsystems of the test system 1.

The test system 1 moreover comprises at least one reference sensor 4. In one embodiment, the reference sensor 4 is, for example, a triaxial accelerometer. In other embodiments, the reference sensors 4 can comprise at least one triaxial accelerometer and/or a gyroscope. Similarly to what has been said for DUT 9, the reference sensor 4 is coupled in a releasable manner to the actuation system 2 by means of the fixing system 3, as better detailed in the following in the description of the fixing system 3. As a consequence, the accelerations produced by the actuation system 2, are transmitted unaltered to the reference sensor 4, without introducing distortions or adding vibrations.

The reference sensor 4 is configured to produce an output signal A_{ref}(t) relative to the acceleration read over time by the reference sensor 4. According to an aspect of the present invention, the reference sensor 4 is of high performance type, so as to be accurate at least as much as the accelerometer of the DUT 9. For example, the reference sensor 4 is a triaxial accelerometer of a known type and commercially available, with characteristics which are typical of a crash test accelerometer, with a bottom scale greater than e.g. 50 g, sampling rate greater than e.g. 1000 Hz. For example, the sampling frequency of the reference sensor 4 can be set via user interface 8.

Accordingly, the output signal A_{ref}(t) to the reference sensor 4 provides an accurate reading of the acceleration induced by the actuation system 2 to the fixing system 3 and consequently to the DUT 9. The output signal A_{ref}(t) to the reference sensor 4 could be different from the input acceleration profile Aᵢₙ(t); this discrepancy is due, for example, to the approximation introduced by the algorithms (described in the following) used to shift from the input acceleration profile *A*ᵢₙ(t) to the position profile *P*ᵢₙ(t) over time supplied to the actuation system 2, and of the non-ideality of the actuation system 2, which, according to the complexity of the input acceleration profile *A*ᵢₙ(t), could introduce small variations in the accelerometric profile.

The test system 1 further comprises an acquisition system 5 configured to receive, as input, the output signal *A*ₒᵤₜ(t) to DUT 9 and the output signal *A*_{ref}(t) to reference sensor 4. The output signal *A*ₒᵤₜ(t) to DUT 9 can be sent to the acquisition system 5 via a wired serial connection and/or via a wireless connection based for example on Wi-Fi or GPRS technology and/or by means of a physical memory support, such as a USB flash drive. The output signal *A*ₒᵤₜ(t) to DUT 9 is preferably sent to the acquisition system 5 together with the execution of the movement corresponding to the signal *P*ᵢₙ(t) by the actuation system 2. The output signal A_{ref}(t) to the reference sensor 4 can be sent to the acquisition system 5 by means of analog, digital or serial communication channels. The output signal *A*_{ref}(t) to the reference sensor 4 is preferably sent to the acquisition system 5 during the operation of the movement corresponding to the signal *P*ᵢₙ(t) by the actuation system 2.

Moreover, the acquisition system 5 is configured to send the output signal *A*ₒᵤₜ(t) to the DUT 9 and the output signal *A*_{ref}(t) to the reference sensor 4 to the control system 7.

The control system 7 is further configured to implement methods for normalising and synchronizing the output signal *A*ₒᵤₜ(t) to DUT 9 and the output signal *A*_{ref}(t) to reference sensor 4.

In particular, the normalisation method, performed by the control system 7, comprises a step of normalising the output signal *A*ₒᵤₜ(t) to DUT 9 and the output signal *A*_{ref}(t) to the reference sensor 4, so that the signals are comparable with one another.

In particular, the synchronization method performed by the control system 7 comprises a step of aligning the respective time windows of the output signal *A*ₒᵤₜ(t) to the DUT 9 and of the output signal A_{ref}(t) to the reference sensor 4, so that for samples having the same position in the respective sample list forming the respective output signal corresponds a same instant of time.

The normalisation and synchronization methods are preparatory for allowing the comparison between the signals, for example based on known signal matching techniques which comprise cross-correlation calculations. The synchronization step can be necessary due to the fact that the clock inside the DUT 9 and the clock inside the control system 7, used for sampling the output signal *A*_{ref}(t) to the reference sensor 4, may not be synchronized with one another. Moreover, the control system 7 and the DUT 9 can determine the sampling start instant of time, i.e. the instant of time in which the acceleration recording is started independent from one another. In particular, the beginning of the sampling time instant of the DUT 9 can depend on crash detection algorithms, which can be different for different DUTs.

The control system 7 stores the signals *A*_{ref2} (t) and *A*ₒᵤₜ₂ (t) obtained from the normalization and synchronization of the output signal *A*ₒᵤₜ (t) to the DUT 9 and of the output signal *A*_{ref}(t) to the reference sensor 4, respectively, in a database making them available for subsequent comparative analyzes, which can be performed automatically or at least partially interactively carried out by an operator of the test system 1.

The test system 1 further comprises a conditioning system 6, configured to send a plurality of input signals to the DUT 9, necessary for the correct operation of the DUT 9, depending on the technical specifications of the DUT 9. For example, the conditioning system 6 can be configured to provide a supply voltage for the DUT 9. For example, the conditioning system 6 can drive the DUT 9 by means of a plurality of analog and/or digital input signals, according to DUT 9 technical specifications. In particular, the conditioning system 6 can drive the DUT 9 by means of a plurality of signals, having a voltage ranging for example between 0 V and 36 V. For example, the conditioning system 6 comprises a programmable power supply and a bench of digital/analog signals.

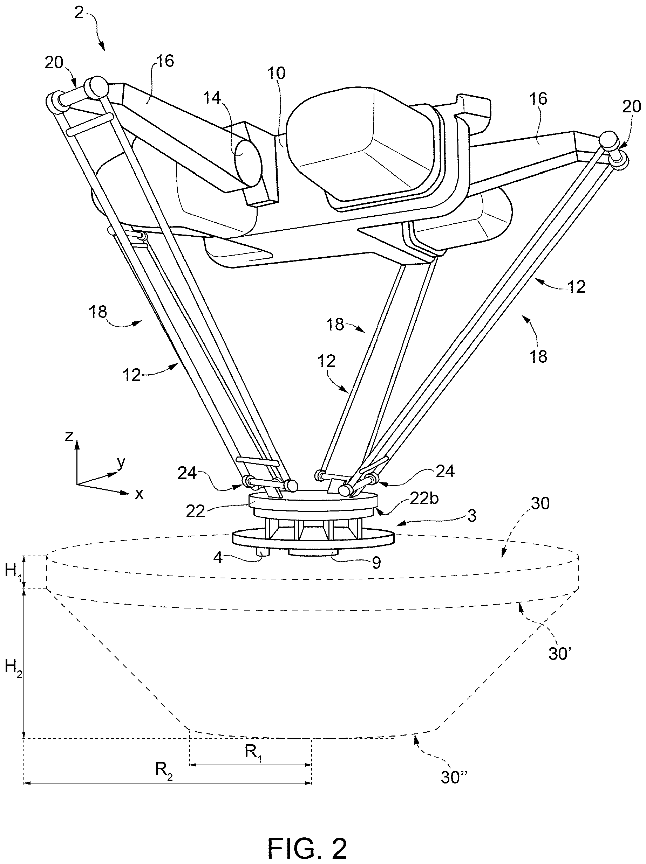

Figure 2 schematically illustrates a portion of the test system 1 in a triaxial system of orthogonal coordinates x, y, z. In particular, Figure 2 schematically illustrates the actuation system 2, the fixing system 3 and the reference sensors 4. As stated, in one embodiment of the present invention, the actuation system 2 is a parallel robot, for example a delta robot of a known type and commercially available. In other embodiments, the actuation system 2 is any known system configured to reproduce acceleration profiles in a controlled manner. For example, the actuation system 2 can comprise three linear magnetic motors for reproducing accelerations on the three axes x, y, z of a Cartesian triplet. Alternatively, the accelerations on a horizontal plane xy could be reproduced by means of a Core XY type system.

In particular, hereinafter, by way of non-limiting example, an embodiment of the present invention is considered wherein the actuation system 2 is a 4 axis delta robot (3 degrees of translational freedom along the axes x, y, z, and one degree of rotation freedom along a rotation axis parallel to the axis z). In other embodiments, the delta robot can be devoid of the degree of rotation freedom. In other embodiments, not shown in the figures, the actuation system 2 can induce a movement of the DUT 9 on a single axis.

In particular, with reference to Figure 2, the actuation system 2 comprises a base platform 10. In a way not shown in the figure, the base platform 10 can be anchored, for example at a portion of an upper surface thereof, to a fixed infrastructure.

A plurality of limbs 12 is mechanically coupled to the base platform 10 by means of respective motorized rotary joints 14. In particular, four limbs 12 extend externally to the base platform 10. Preferably, in plan view on the horizontal plane xy, the four limbs 12 are angularly equidistant from one another. Each limb 12 comprises a first elongated element 16, mechanically coupled to a second elongated element 18 by means of a first articulation device 20, which allows the second elongated element 18 to rotate in any direction relative to the first elongated element 16. The second elongated elements 18 converge towards a mobile platform 22, to which they are fixed by means of a respective second articulation device 24. The mobile platform 22 has a main extension direction parallel to the horizontal plane xy.

In particular, for example, for each arm 12 each first elongated element 16 is a bar, each first articulation device 20 comprises two spherical joints distanced from one another, each second articulation device 24 comprises two spherical joints distanced from one another, and each second elongated element 18 is a parallel support quadrilateral linkage with a parallelogram structure, in which adjacent sides of the quadrilateral are mechanically coupled together by means of a respective spherical joint comprised between the spherical joints of the first and of the second articulation devices 20, 24.

According to an aspect of the present invention, as better detailed in the following, the fixing system 3 is fixed to a lower surface 22b of the mobile platform 22 in a releasable manner.

In a way in itself known for the delta robots, during operation of the actuation system 2, the driving of the motorized rotary joints 14 enables the mobile platform 22 to be moved in a working space 30; in particular, the movement of the mobile platform 22 has three degrees of translational freedom (corresponding to the x, y, z axes of the reference system) and one degree of rotational freedom relative to an axis parallel to the axis z.

For example, the working space 30 comprises a first region of space with a cylindrical shape, with a radius R₁ greater than, e.g., 650 mm and a height H₁ greater than, e.g., 200 mm; the working space 30 further comprises a second region of space shaped like an inverted truncated cone, with a height H₂ greater, for example, than 200 mm, having a first base surface 30' coinciding with a base surface of the first region of the working space 30 and a second base surface 30" extending from the first region of the working space 30 and having radius R₂ smaller than the radius R₁ of the first region of the working space 30.

Independently of the embodiment of the actuation system 2, of which the above known type of delta robot is to be intended purely by way of non-limiting example, it is preferable that the actuation system 2 has a working space 30 having greater or equal volume to what has been previously described, so as to allow, on the inside thereof, the movement to which a DUT 9, mounted on board of a vehicle at the occurrence of impact due to a road accident, typically withstands.

It is also preferable that the actuation system 2 allows to reproduce an acceleration peak and an acceleration variation typical of the types of impact, both small and large, that develop during automobile accidents. Moreover, the actuation system 2 must allow to support and accelerate the fixing system 3 with DUT 9 and reference sensors 4, without compromising the desired accelerations. For example, the acceleration peak attributable to the mobile platform 22 is greater than 10 g.

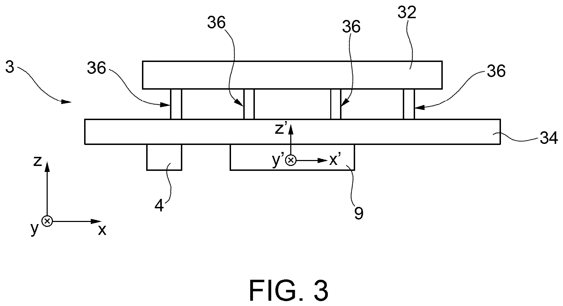

Figure 3 schematically shows a side section view, on the plane xz, of the fixing system 3 of the test system 1. For clarity of exposition, in Figure 3 the fixing system 3 is shown detached from the actuation system 2.

With joint reference to Figures 2 and 3, the fixing system 3 comprises a flat upper plate 32 and a flat lower plate 34 parallel to the plate 32. The upper plate 32 can be fixed in a releasable manner to the lower surface of the mobile platform 22, for example by using screws or bolts (not illustrated). The lower plate 34 extends distanced from the upper plate 32 and is fixed to the upper plate 32 by means of a plurality of pins 36 which extend perpendicular to the plates 32 and 34. As a result, the actuation system 2 induces a rigid movement on the upper plate 32 and on the lower plate 34 which are firmly interconnected to one another by the pins 36.

According to an aspect of the present invention, the DUT 9 and the reference sensors 4 are coupled to the lower plate 34 of the fixing system 3 in a releasable manner, for example by means of double-sided adhesive tapes. Preferably, the DUT 9 is fixed in a barycentric position with respect to the fixing system 3 and to the mobile platform 22.

Consequently, as stated, the actuation system 2 allows the control over time of the position *P*ᵢₙ (t) of the DUT 9, allowing for example to reproduce acceleration profiles *A*ᵢₙ(t) typical of road accidents, stored for example in the database of the control system 7.

When the DUT 9 is mounted on the fixing system 3 as described above, its triaxial internal reference system x', y', z' can coincide with the triaxial reference system x, y, z of the actuation system 2, or it can be transformed into the triaxial reference system x, y, z of the actuation system 2 by means of orthogonal rotations.

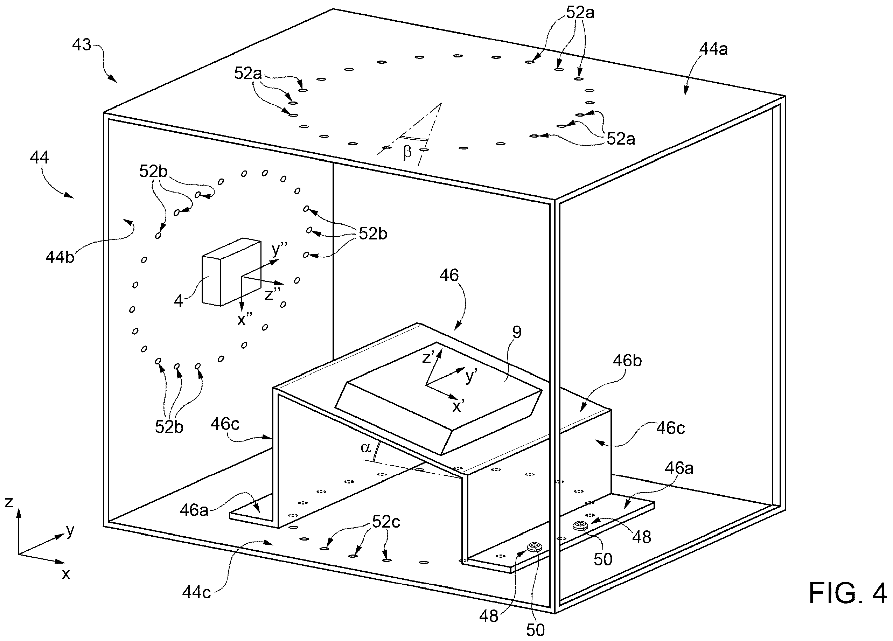

Figure 4 schematically illustrates a perspective view in the space xyz of a fixing system 43 of a test system according to another embodiment of the present invention. Said test system comprises the same components and the same architectural scheme as the test system 1 of Figure 1, with the exception of the fixing system 3, replaced by the fixing system 43 of Figure 4. In other words, said test system differs from the test system of Figure 1 exclusively by the implementation of the fixing system, and consequently by the manner in which the DUT 9 and the reference sensors 4 are coupled to the actuation system 2.

In the following, reference will be made to the fixing system 3 of Figure 3 as well as to the fixing system 3 of a simple type, and to the fixing system 43 of Figure 4 as well as to the fixing system 43 of a complex type.

With reference to Figure 4, the fixing system 43 comprises a cage 44, for example shaped as a parallelepiped. At least one upper face 44a, a side face 44b and a lower face 44c of the cage 44 are closed, while at least one of the remaining faces is open. In a manner not shown in the figures, the upper face 44a of the cage 44 is mechanically coupled to the lower surface 22b of the mobile platform 22, similarly to what has been described for the upper plate 32 of the fixing system 3 of the test system 1. As a consequence, when the fixing system 43 is connected to the mobile platform 22, the upper face 44a and the lower face 44c are parallel to the horizontal plane xy, while the side face 44b is orthogonal to the horizontal plane xy.

The fixing system 43 further comprises an inclined bracket 46, adapted to support the DUT 9 so that the horizontal plane x'y' of the internal triaxial reference system of the DUT 9 forms an angle different from zero and not orthogonal to the wall 44c and therefore to the horizontal plane xy of the triaxial reference system of the actuation system 2. For example, the inclined bracket 46 comprises two fixing portions 46a extending distanced from one another and lying on a same plane, a support portion 46b lying on a plane forming an angle α, for example ranging between 0° and 45°, with the lying plane of the fixing portions 46a, and two connection portions 46c, extending distanced from one another, thus connecting a respective fixing portion 46a to a respective side of the support portion 46b.

The reference sensors 4 can be coupled in a releasable manner, for example by means of double-sided adhesive tapes, to any face of the cage 44. The reference sensors 4 are preferably arranged so that their triaxial reference system x", y", z" coincides with the triaxial reference system x, y, z of the actuation system 2 or is obtainable (as in the case of Figure 4) by the triaxial reference system x, y, z of the actuation system 2 by means of orthogonal rotations.

The fixing system 43 further comprises releasable fixing means 48 adapted to fix the inclined bracket 46, in a releasable manner, to one between the upper face 44a, the side face 44b and the lower face 44c of the cage 44. For example, each one between the upper face 44a, the side face 44b and the lower face 44c of the cage 44 can comprise a respective plurality of holes 52a, 52b, 52c, and each of the fixing portions 46a of the inclined bracket 46 can comprise a respective plurality of holes 50, of extension and with a distance from one another so that they can align with a sub-set of holes 52a-52c of one between the upper face 44a, the side face 44b and the lower face 44c of the cage 44. Accordingly, the releasable type fixing means 48 can comprise for example screws adapted to fix the inclined bracket 46, in a releasable manner, to one between the upper face 44a, the side face 44b or the lower face 44c of the cage 44 at the holes 50 of the fixing portion 46a of the inclined bracket 46 and of a sub-set of holes 52a-52c of one between the upper face 44a, the side face 44b and the lower face 44c of the cage 44. In other embodiments, the releasable type fixing means 48 can be bayonet or snap type fixing means. Independently of the embodiment, the releasable fixing means 48 ensure that the movement of the cage 44, induced in use by the actuation system 2, is transmitted, unaltered, to the DUT 9, without introducing distortions or adding vibrations. Moreover, to this end,the fixing system 43 could comprise counterweights (not shown in the figure) to be coupled to the cage 44 so as to compensate for any unbalancing.

According to an aspect of the present invention, each plurality of holes 52a, 52b, 52c comprises individual holes equidistant from one another along a respective circumference. Accordingly, two straight lines passing through the center of said circumference and two respective adjacent holes of the plurality of holes 52a, 52b, 52c form an angle β comprised, for example, between 12 and 20 degrees, in particular, for example, 15 degrees; consequently, the number of holes of each plurality of holes 52a, 52b, 52c is ranged, for example, between 18 and 30, in particular, for example, each plurality of holes comprises 24 holes.

Accordingly, the inclined bracket 46 can be fixed to each face 44a-44c of the cage 44 by means of the releasable type fixing means 48 with different orientations; said orientations being corresponding to rotations with angular pitch β relative to an axis orthogonal to said face 44a-44c of the cage 44.

Accordingly, in embodiments of the test system comprising the fixing system 43, the releasable type fixing means 48 allow to fix the inclined bracket 46 in different angular configurations, corresponding to different orientations of the DUT 9 with respect to the actuation system 2. Accordingly, a test system comprising the fixing system 43 allows to execute tests of the DUT 9 by at least partially reproducing the inclination, relative to a triaxial reference system, to which the DUT 9 is subjected when it is fixed on a vehicle. In order to further increase the versatility of inclination choice of the DUT 9 relative to the horizontal plane xy of the triaxial reference system of the actuation system 2, the fixing system 43 can comprise a plurality of inclined brackets 46 with different angles α between the lying plane of respective support portions 46b and the lying plane of respective fixing portions 46a; each inclined bracket of said plurality of inclined brackets 46 is interchangeable by means of a releasable type fixing means 48.

Consequently, the fixing system 43 of Figure 4 offers greater versatility with respect to the fixing system 3 of Figure 3 regarding the orientation of the DUT 9 with reference to the triaxial reference system x, y, z of the actuation system 2. For example, the fixing system 43 of Figure 4 allows to test previously calibrated DUT 9 according to the reference axes of a vehicle, under fixing conditions with an inclined orientation relative to a triaxial reference system of the accelerometer of the DUT 9, by reproducing said orientation by using different inclined brackets 46 and with the possibility of fixing an inclined bracket 46 in different ways on different faces of the cage 44. For example, the DUT 9 may be an EDR or a black box for vehicles of known type, which is previously self-calibrated on a vehicle having a different orientation from that indicated by the manufacturer of the black box for compliance with the triaxial reference system of the accelerometer inside the black box.

The fixing system 3 of Figure 3 is simpler than the fixing system 43 of Figure 4 and allows, for example, to test black boxes in factory configuration or previously calibrated on a vehicle having an orientation conforming to the triaxial reference system of the vehicle, or with exactly orthogonal rotations.

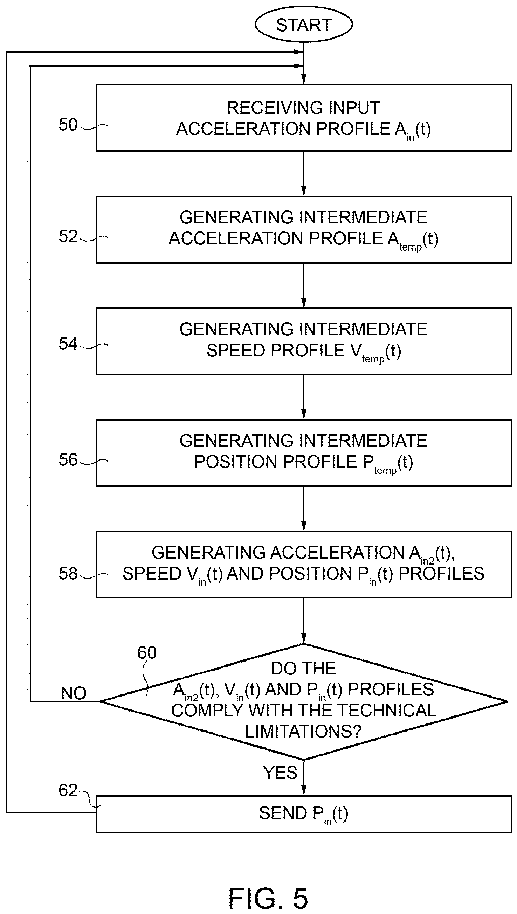

Figure 5 illustrates, by means of a block diagram, a method for generating a position profile *P*ᵢₙ(t) over time, adapted to control the actuation system 2, starting from an acceleration profile *A*ᵢₙ(t) over time. For example, the method of Figure 5 is implemented by running a software stored in the control system 7. The method of Figure 5 is common to all the embodiments of the present invention.

With reference to Figure 5, first of all the method for generating the position profile *P*ᵢₙ(t) over time, comprises the step 50 for receiving an input acceleration profile *A*ᵢₙ(t). The input acceleration profile *A*ᵢₙ(t) is for example a table having a row for each sampling instant and four columns, corresponding to an acceleration component parallel to the axis x, an acceleration component parallel to the axis y, an acceleration component parallel to the axis z and a value of the sampling instant, respectively. The list is preferably ordered according to the value of the sampling instant. The sampling is preferably regular, according to an input sampling frequency *f*ᵢₙ. For example, the table is contained in a file stored in a database within the control system 7. For example, the table is read from an external database via the telecommunication module of the control system 7.

Following step 50, step 52 is performed for generating an intermediate acceleration profile *A*ₜₑₘₚ(t) starting from the input acceleration profile *A*ᵢₙ(t), aimed at resolving a possible discrepancy between the input sampling frequency *f*ᵢₙ and an optimal sampling frequency *f*_{act} for controlling the actuation system 2. In particular, step 52 of generating an intermediate acceleration profile *A*ₜₑₘₚ(t) comprises the adaptation of the input acceleration profile *A*ᵢₙ(t), in order to obtain an intermediate acceleration profile *A*ₜₑₘₚ(t) that has the optimal sampling frequency *f*_{act}. The adaptation step is performed according to techniques of frequency spectrum processing, that is, sampling parameters (such as period, amplitude), which are in themselves known.

Following step 52, step 54 is performed for generating an intermediate speed profile *V*ₜₑₘₚ(t) starting from the intermediate acceleration profile *A*ₜₑₘₚ(t). In particular, the intermediate speed profile *V*ₜₑₘₚ(t) is obtained by integrating the intermediate acceleration profile *A*ₜₑₘₚ(t) over time.

Following step 54, step 56 is performed for generating an intermediate position profile *P*ₜₑₘₚ(t) starting from the intermediate speed profile *V*ₜₑₘₚ(t) . In particular, the intermediate position profile *P*ₜₑₘₚ(t) is obtained by integrating the intermediate speed profile *V*ₜₑₘₚ(t) over time.

Following step 56, step 58 is performed for generating a complete acceleration *A*ᵢₙ₂(t), speed *V*ᵢₙ(t) and position *P*ᵢₙ(t) profiles, starting from the intermediate acceleration *A*ₜₑₘₚ(t), speed *V*ₜₑₘₚ (t) and position *P*ₜₑₘₚ (t) profiles, respectively. In particular, step 58 is aimed at extending and completing the intermediate position profile *P*ₜₑₘₚ(t) by successively adding, thereto, in temporal terms, a trajectory adapted to stop the motion of the actuation system 2 of Figure 2 and consequently of the DUT 9 in a controlled manner.

The deceleration necessary to stop the motion of the mobile platform 22 of the actuation system 2 of Figure 2 is calculated starting from the acceleration, speed and position values at the last instant of time, of the intermediate acceleration *A*ₜₑₘₚ(t), speed *V*ₜₑₘₚ(t) and position *P*ₜₑₘₚ(t) profiles, respectively; the deceleration is calculated in a manner in itself known, for example by polynomial motion laws; the polynomial motion laws are preferably at least of the fifth order, so as to avoid high acceleration variations with respect to the technical specifications of the actuation system 2.

Optionally, a zero-acceleration stretch is interposed between the end of the intermediate acceleration profile *A*ₜₑₘₚ(t) and the start of the deceleration profile, so as to simplify the analysis of the test results, keeping the acceleration to be analyzed separate with respect to the functional deceleration stretch which is exclusively for stopping the motion of the DUT 9.

Once the acceleration profile *A*ᵢₙ₂(t), has been calculated, the speed profile *V*ᵢₙ(t) and the position profile *P*ᵢₙ(t) are calculated, similarly to steps 54-56 with reference to the intermediate acceleration profile *A*ₜₑₘₚ(t).

Following step 58, step 60 is performed for checking whether each of the acceleration *A*ᵢₙ₂(t), speed *V*ᵢₙ(t) and position *P*ᵢₙ(t) profiles, respects the technical limits of the actuation system 2. In particular, during step 60, it is checked whether the peak acceleration and the maximum acceleration variation associated with the acceleration profile *A*ᵢₙ₂(t) and the peak speed associated with the speed profile *V*ᵢₙ(t) are lesser than the respective parameters, stored for example in configuration files of the control system 7. Furthermore, during step 60, it is checked whether the displacement associated with the position profile *P*ᵢₙ(t) respects the limits of the working space 30 of the actuation system 2 of Figure 2, said limits for example, being stored in configuration files of the control system 7.

If the check carried out in step 60 fails, i.e. if at least one of the acceleration *A*ᵢₙ₂(t), speed *V*ᵢₙ(t) and position *P*ᵢₙ(t) profiles does not respect the technical limits of the actuation system 2, the test is interrupted and returns to step 50 for receiving an input acceleration profile *A*ᵢₙ(t). Optionally, an error message is signalled by means of the user interface 8.

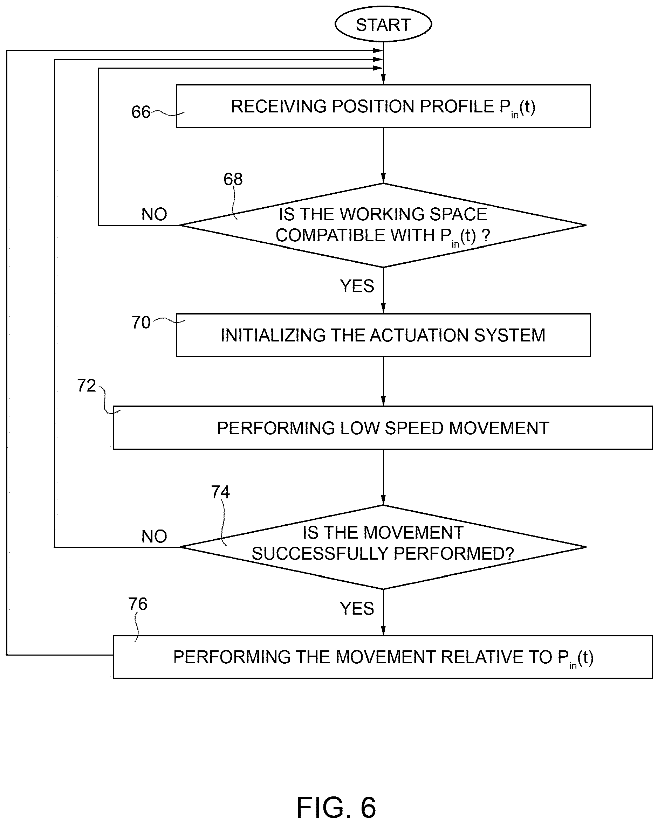

If the check carried out in step 60 is successful, i.e. if each of the acceleration *A*ᵢₙ₂(t), speed *V*ᵢₙ(t) and position *P*ᵢₙ(t) profiles is compatible with the technical limits of the actuation system 2, then step 62 is performed for sending the position profile *P*ᵢₙ(t) to the actuation system 2. Optionally, step 62 may be preceded by a conversion step of the position profile *P*ᵢₙ(t) into a format readable by the actuation system 2, for example a programming language of a delta robot. Once the position profile *P*ᵢₙ(t) has been sent to the actuation system 2, it is possible to execute a control method of the actuation system 2, as detailed in the following in Figure 6. Following step 62, it returns to step 50 for the receiving of an input acceleration profile *A*ᵢₙ(t).

With reference to Figure 6, a block diagram of the control method of the actuation system 2 of Figure 2 is illustrated. The method of Figure 6 is for example implemented by running software stored in the control system 7, which can in turn summon the running of a software stored in the actuation system 2. The method of Figure 6 is common to all embodiments of the present invention.

First of all, the control method of the actuation system 2 comprises the step 66 of receiving a position profile *P*ᵢₙ(t). In particular, in step 66, the actuation system 2 receives a position profile *P*ᵢₙ(t) in a reading format that can be interpreted by the actuation system 2.

After step 66, step 68 is performed for checking whether the working space 30 of the actuation system 2 of Figure 2 is compatible with the position profile *P*ᵢₙ(t). In particular, during step 68 it is checked whether it is possible to move the mobile platform 22 as indicated by the position profile *P*ᵢₙ(t) without leaving the working space 30. The step 68 implements a further control of the compatibility of the working space 30 with the position profile *P*ᵢₙ(t), additional to step 60 described above. Step 68 is optional and allows to further increase the safety of execution of the actuation method of the actuation system 2.

If the check carried out in step 68 fails, the control of the actuation system 2 is interrupted and returns to step 66 for the receiving of a position profile Pᵢₙ(t). Optionally, an error message is signalled by means of the user interface 8.

If the control performed in step 68 is successful, step 70 is performed for initializing the actuation system 2. In particular, during step 70 the actuation system 2 is controlled so as to carry/move the mobile platform 22 into a preferred starting position. The preferred initial position is determined considering that the actuation system 2 typically has higher performances when the mobile platform 22 is near the centroid of the working space 30. Accordingly, for example, it is possible to perform a rigid translation in the space of the position profile *P*ᵢₙ(t), so as to minimize the time travelled at high distances from the centroid of the working space 30 during the performing of the movement corresponding to the position profile *P*ᵢₙ(t), carried out in successive steps of the method.

Following step 70, step 72 is performed for performing a low acceleration and speed movement. Said low speed movement step of the platform 22 contributes to the "trigger" of the DUT device in order to prevent false measurements in the DUT.

In particular, during step 72 a slow position profile *P*_{slow}(t) is supplied to the actuation system 2. The slow position profile *P*_{slow}(t) is obtained, preferably but not exclusively, from the position profile *P*ᵢₙ(t) so as to correspond to the same trajectory but uniformly reducing the speed thereof; in particular, the speed peak of the slow position profile *P*_{slow}(t) must be lower than a lower threshold of the speed limit used in step 60 of the method of Figure 5.

After step 72, step 74 is performed for checking whether the movement at reduced speed of step 70 has been performed successfully. If not, the control of the actuation system 2 is interrupted and it is returned to step 66 for receiving a position profile *P*ᵢₙ(t). Optionally, an error message is signalled by means of the user interface 8. In the positive case, step 76 is performed for performing the movement corresponding to *P*ᵢₙ(t). In other embodiments, steps 72 and 74 can be omitted, by directly passing from the initialization step 70 of the actuation system 2 to the step 76 of performing the movement corresponding to *P*ᵢₙ(t).

In other embodiments, step 72 can be present while step 74 can be omitted, or performed exclusively at input acceleration profiles *A*ᵢₙ(t) not previously tried, or performed only at the discretion of an operator of the control system 1.

Once step 76 has been completed, the control method of the actuation system 2 relative to the position profile *P*ᵢₙ(t) is terminated, and it is possible to return to step 66 of receiving a new position profile *P*ᵢₙ(t). At the same time, at the end of step 76, the DUT 9 and the reference sensors 4 recorded respective acceleration profiles *A*ₒᵤₜ(t) and *A*_{ref}(t) relative to the position profile Pᵢₙ(t), which are sent to the acquisition system 5 of Figure 1.

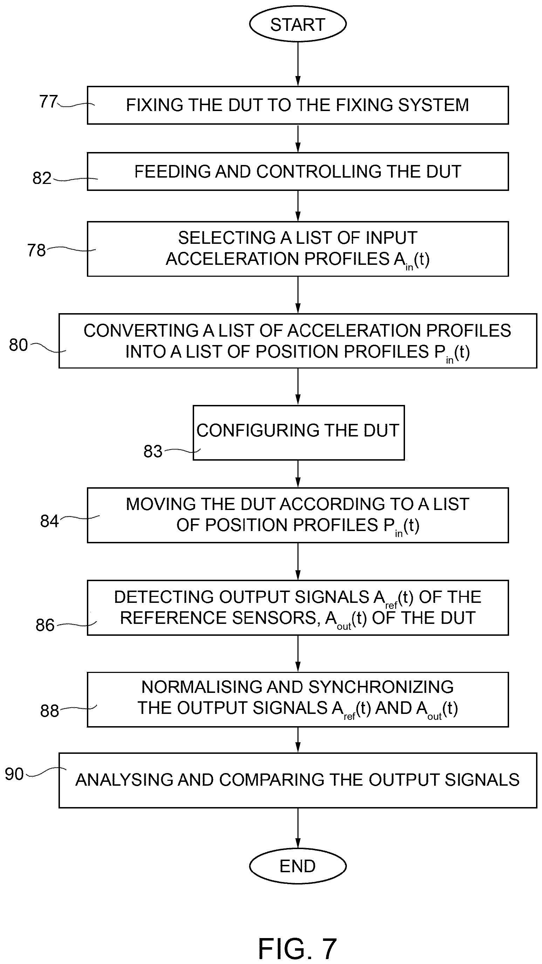

Figure 7 shows, by means of a block diagram, a test method of a test system according to any embodiment of the present invention.

With joint reference to Figures 1-4 and 7, the test method first comprises step 77 of fixing the DUT 9 to the fixing system 3 or 43, according to the embodiment of the test system 1, and consequently to the actuation system 2.

In particular, in embodiments of the test system 1 comprising the simple-type fixing system 3, the step 77 comprises the step of fixing the DUT 9 to the lower plate 34 of the fixing system 3.

Alternatively, in embodiments of the test system 1 comprising the complex-type fixing system 43, the step 77 comprises the step of arranging the DUT 9 inside the cage 44 according to a desired orientation. For example, step 77 can comprise the step of releasing the inclined bracket 46 by means of the fixing means 48 of a releasable type, reorienting or replacing the inclined bracket 46 with another inclined bracket of different inclination, fixing the inclined bracket 46 again by means of the fixing means 48 of a releasable type.

After step 77, step 82 is performed for feeding and controlling the DUT 9 so that it can detect an acceleration in successive steps of the test method of the test system. In particular, during step 82, the DUT 9 is fed by means of the conditioning system 6, which further provides input signals adapted to control the DUT 9 so as to ensure the correct operation thereof.

After step 82, step 78 is performed for selecting one or more input acceleration profiles *A*ᵢₙ(t) from the database so as to apply this profile/these profiles to the DUT 9. The list can be generated by a user by means of the user interface 8.

After step 78, step 80 is performed for converting the input acceleration profile or profiles *A*ᵢₙ(t) into a list of input position profiles *P*ᵢₙ(t). In particular, during step 80 of the control method of the test system, the method for generating the position profile *P*ᵢₙ(t) over time, described in Figure 5, is performed for each element of the list generated during step 78.

After step 80, step 83 is performed for configuring the DUT 9 for the subsequent movement; for example, the configuration step of the DUT 9 can provide the detection of a GPS signal or of its rest position (gravity vector) according to procedures indicated by the manufacturer of the DUT 9. Alternatively, step 83 could be performed after step 82 as preliminary activity for the following tests.

After step 83, step 84 is performed for moving the DUT 9 so as to reproduce position profiles *P*ᵢₙ(t) generated during step 80. In particular, during step 82, the control method of the actuation system 2 is performed, described in Figure 6, for each element of the list generated in step 80.

Subsequently or simultaneously with step 84, step 86 is performed for detecting output acceleration profiles *A*_{ref}(t) and *A*ₒᵤₜ(t). In particular, according to an aspect of the present invention, the acquisition system 5 is further configured to read in real time, during the movement of the actuation system 2, the output signal *A*_{ref}(t) of the reference sensors 4; the acquisition system 6 is moreover configured to read the output signal *A*ₒᵤₜ(t) of the DUT 9.

After step 86, it is possible to take step 88 for the normalisation and synchronization of the output signals A_{ref}(t) and *A*ₒᵤₜ(t), performed by the control system 7 and adapted to generate the signals *A*_{ref2}(t) and *A*ₒᵤₜ₂(t), subsequently processed by the control system 7 for a comparative analysis of the results.

After step 88, it is possible to take the comparative analysis step 90 of the output signals *A*_{ref2}(t) and *A*ₒᵤₜ₂(t), sent by the acquisition system 5 to the control system 7. The analysis can be performed automatically by means of software of the control system 7 or performed at least in part by the user by means of the user interface 8. The results of the analysis can be visualized by means of the graphic interface 8 by means of tables and/or graphs.

Furthermore, after step 86, it is possible to return to step 78 in order to select a new list of input acceleration profiles *A*ᵢₙ (t) for a new test of the DUT 9, or go back to step 77 in order to replace the DUT 9 with another DUT. In particular, the memory of the control system 7 is configured to store the output signals *A*_{ref}(t) and *A*ₒᵤₜ(t), obtained following the step 86 relating to a first test, so that the steps 88 and 90 of the first test can be postponed and performed after the performing steps 78-86 (or steps 77-86 if DUT has to be changed) of a second test.

After step 90, it is possible to go back to step 78 in order to select a new list of acceleration profiles *A*ᵢₙ (t) for a new test of the DUT 9, or go back to step 77 in order to replace the DUT 9 with another DUT.

From an examination of the characteristics of the present invention described and illustrated herein, the advantages that it allows to obtain are evident.

In particular, for example, the test system allows to program the performance of several tests in a pre-set series of tests; the user of the test system can reiterate the execution of the same test and/or concatenate several tests in a series of tests. Furthermore, the execution of test series is conducted in an automatic manner, requiring no user intervention during the execution of the test series.

Moreover, the test system according to the present disclosure guarantees greater reproducibility of the tests with respect to the prior art, since the execution of the test does not damage nor alter the condition of the test system.

Moreover, the accelerations to which the DUT is subjected during the execution of the tests can develop in a three-dimensional space, differently from the simulation systems of automotive impacts of a known type, in which it is possible to carry out monodirectional tests, such as the movement of a slide connected to a seat of a vehicle.

Furthermore, the costs and time required to execute the tests are significantly reduced compared to known test systems, also due to the fact that no type of destructive test is foreseen.

Moreover, the variety of tests that can be executed is extremely wide and heterogeneous, since it is possible to program the test system to acquire acceleration profiles corresponding to real impacts, recorded during the use of the DUT or devices similar to the DUT.

Finally, it is clear that modifications and variations can be made to the invention described and illustrated herein without thereby departing from the protective scope of the present invention, as defined in the appended claims.

For example, it is possible to execute tests for several DUTs in parallel, mechanically coupling a plurality of DUTs to the fixing system.

For example, the complex-type fixing system can allow a reconfigurable orientation of the DUT 9 in known and per se alternative ways to the use of at least one inclined bracket 46.

## Claims

1. A combination of a test system (1) for a vehicle event recorder (DUT, 9) configured to identify and record an impact caused by a road accident, and the vehicle event recorder (DUT, 9); said event recorder (DUT, 9) being provided with at least one accelerometer and configured to detect a measured acceleration (*A*ₒᵤₜ(t)); said test system comprising:
- a database, containing a plurality of input acceleration profiles (Aᵢₙ(t)), each input acceleration profile representing an impact caused by a road accident;
- a control system (7), configured to acquire (78) at least one input acceleration profile (Aᵢₙ(t)) selected from said plurality of input acceleration profiles;
- a mobile platform (22) being under the thrust of an actuation system (2) and provided with a support (3; 43) configured to stably carry said event recorder (DUT, 9) said control system (7) configured to convert said selected input acceleration profile (Aᵢₙ(t)) into a position profile (Pᵢₙ(t)) and to control said actuation system (2) to move said mobile platform (22) according to said position profile (Pᵢₙ(t));
- a reference sensor (4) arranged on said support (3; 43), configured to detect a reference acceleration (A_{ref}(t)) during a movement operation of said mobile platform (22);
said control system (7) being further configured to compare said reference acceleration (*A*_{ref}(t)) with said measured acceleration (*A*ₒᵤₜ(t)), detected by said event recorder (DUT, 9) , during said movement operation of the mobile platform (22).

2. The combination according to claim 1, wherein said actuation system (2) comprises a manipulator provided with actuators, and wherein said movement operation of said mobile platform (22) is performed by said manipulator.

3. The combination according to claim 1, wherein said actuation system (2) comprises a multiaxial bench provided with actuators, and wherein said movement operation of the mobile platform (22) is performed by said multiaxial bench.

4. The combination according to claim 1, wherein said actuation system (2) comprises a delta robot, and wherein said movement operation of the mobile platform (22) is performed by said delta robot.

5. The combination according to any one of the preceding claims, wherein said selected input acceleration profile (Aᵢₙ(t)) has a first sampling frequency (*f*ᵢₙ) and wherein said control system (7) is further configured to:
- receive (50) said selected input acceleration profile (*A*ᵢₙ(t)), said selected input acceleration profile (Aᵢₙ(t)) comprising numerical values ordered by successive sampling instants obtained from said first sampling frequency (fᵢₙ);
- generate (52) an intermediate acceleration profile (Aₜₑₘₚ(t)) having a second sampling frequency (f_{act}); modify said input acceleration profile (Aᵢₙ(t)), so that said first sampling frequency (fᵢₙ) is equal to said second sampling frequency (fact);
- integrate (54) said intermediate acceleration profile (Aₜₑₘₚ(t)) in order to calculate an intermediate speed profile (vₜₑₘₚ(t));
- integrate (56) said intermediate speed profile (vₜₑₘₚ(t)) in order to calculate an intermediate position profile (*P*ₜₑₘₚ(t)); and
- generate (58) a complete acceleration (*A*ᵢₙ₂(t)), speed (Vᵢₙ(t)) and position (Pᵢₙ(t)) profiles, starting from the intermediate acceleration (Aₜₑₘₚ(t)), speed (Vₜₑₘₚ (t)) and position (Pₜₑₘₚ(t)) profile, respectively;
wherein the intermediate position profile (Pₜₑₘₚ(t)) is extended and completed by successively adding thereto, in temporal terms, a trajectory adapted to stop the motion of the actuation system (2) in a controlled manner; and wherein said trajectory provides a deceleration calculated from the acceleration, speed and position values at the last instant of time of said intermediate acceleration (Aₜₑₘₚ(t)), speed (Vₜₑₘₚ(t)) and position (Pₜₑₘₚ(t)) profiles, respectively.

6. The combination according to claim 5, wherein said control system (7) is further configured to provide a stretch with a zero acceleration between the intermediate acceleration profile (Aₜₑₘₚ(t)) and the beginning of said trajectory

7. The combination according to any one of the preceding claims, wherein said support (3; 43) is configured to provide at least one stable and pre-set spatial arrangement between said reference sensor (4), said event recorder (9) and said mobile platform (22).

8. The combination according to claim 7, wherein said support (3; 43) is configured to provide, in an adjustable way, a plurality of pre-set stable positions between said reference sensor (4), said event recorder (9) and said mobile platform (22) .

9. The combination according to claim 7 or 8, wherein said support (3) comprises a support plate (34) provided, on a first face, with fixing means of a releasable type for said event recorder (9), said reference sensor (4) being carried by said support plate and arranged on said first face, said support plate being provided, on a second face opposite to said first face, with means for connection to said mobile platform (22).

10. The combination according to claim 7 or 8, wherein said support (43) comprises a cage (44) defining an internal cavity accessible from the outside through at least one opening; and a bracket (46) carried by at least one face (44a-44c) of said cage (44) and provided with a support wall (46b) inclined with respect to said at least one face at a first acute angle (α), said support wall (46b) being provided with fixing means of a releasable type for said event recorder (9), said reference sensor (4) being carried by said cage (44).

11. The combination according to claim 10, wherein fixing means of a releasable type (48) are provided between said bracket (46) and said at least one face (44a-44c) which are adapted to enable removal of said bracket (46) and replace it with another bracket adapted to provide, when mounted, an angle different from the first acute angle (α) provided by the previously inserted bracket (46).

12. The combination according to claim 10 or 11, wherein a plurality of holes (52a-52c) is provided interposed between said at least one face (44a-44c) and said bracket (46) and adapted to enable a plurality of pre-set angular positions of said bracket with respect to said at least one face, so as to control the relative angular orientation of the event recorder (9) with respect to said mobile platform (22).

13. The combination according to any one of the preceding claims, wherein said control system (7) is moreover configured to:
- normalize (88) said measured acceleration (Aₒᵤₜ(t)) and said reference acceleration (A_{ref}(t)) so as to render them comparable on one and the same time scale;
- synchronize (88) said measured acceleration (*A*ₒᵤₜ(t)) and said reference acceleration (*A*_{ref}(t)) so that they have respective time windows aligned with one another;
- obtain (88) a first output signal (*A*_{ref}(t)) and a second output signal (*A*ₒᵤₜ(t)) resulting from the operations of normalisation (88) and synchronization (88);
the control system (7) being moreover configured to compare (90) said first and said second output signal (*A*_{ref}(t)), (*A*ₒᵤₜ₂(t)).

14. A test method for a vehicle event recorder (DUT, 9) for vehicles configured to identify and record an impact caused by a road accident, said event recorder being provided with at least one accelerometer configured to detect a measured acceleration (*A*ₒᵤₜ(t)), said method comprising the steps of:
- selecting (78) from a database containing a plurality of acceleration profiles, each representing an impact caused by a road accident, at least one input acceleration profile (*A*ᵢₙ(t));
- acquiring (78) the at least one input acceleration profile (Aᵢₙ(t)) selected from said plurality of input acceleration profiles at a control system (7);
- fixing (77) said event recorder (9) in a stable manner on a support (3; 43) carried by a mobile platform (22) under the thrust of an actuation system (2); converting said selected input acceleration profile (Aᵢₙ(t)) into a position profile (Pᵢₙ(t));
- moving (84) said mobile platform (22) according to the selected input position profile (Pᵢₙ (t));
- detecting (86) by means of a reference sensor (4), arranged on said mobile platform, a reference acceleration (A_{ref}(t)) and said measured acceleration detected by the event recorder (9) during the step of moving said mobile platform;
- comparing (90) said reference acceleration (A_{ref}(t)) with said measured acceleration (*A*ₒᵤₜ(t)).

15. The method according to claim 14, wherein said selected input acceleration profile (*A*ᵢₙ(t)) has a first sampling frequency (*f*ᵢₙ) and wherein said converting step comprises the steps of:
- generating (52) an intermediate acceleration profile (*A*ₜₑₘₚ(t)), having a second sampling frequency (*f*_{act}), wherein said selected acceleration profile is modified so that said first sampling frequency is equal to said second sampling frequency;
- calculating (54) an intermediate speed profile (*v*ₜₑₘₚ(t)) by integrating said intermediate acceleration profile;
- calculating (56) an intermediate position profile (*P*ₜₑₘₚ(t)) by integrating said intermediate speed profile;
- generating (58) a complete acceleration (*A*ᵢₙ₂(t)) , speed (Vᵢₙ(t)) and position (Pin(t)) profiles, starting from the intermediate acceleration (Aₜₑₘₚ(t)), speed (Vₜₑₘₚ(t)) and position (Pₜₑₘₚ(t)) profile, respectively; wherein the intermediate position profile (Pₜₑₘₚ(t)) is extended and completed by successively adding thereto, in temporal terms, a trajectory adapted to stop the motion of the actuation system (2) in a controlled manner; and wherein said trajectory providing a calculated deceleration starting from the acceleration, speed and position values at the last instant of time of said intermediate acceleration (Aₜₑₘₚ(t)), speed (Vₜₑₘₚ(t)) and position (Pₜₑₘₚ(t)) profiles, respectively.

16. The method according to claim 15, wherein the step of generating (58) the complete acceleration profile (*A*ᵢₙ₂(t)) moreover comprises the step of adding a stretch with zero acceleration between the end of said intermediate acceleration profile (Aₜₑₘₚ(t)) and the beginning of said trajectory

17. The method according to any one of the claims from 15 to 16, moreover comprising the steps of:
- normalizing (88) said measured acceleration (*A*ₒᵤₜ(t)) and said reference acceleration (*A*_{ref}(t)) so that both the accelerations are comparable on one and the same time scale;
- synchronizing (88) said measured acceleration (*A*ₒᵤₜ(t)) and said reference acceleration (*A*_{ref}(t)) so that they have respective time windows aligned with one another;
- generating (88) a first output signal (*A*_{ref2}(t)) and a second output signal (*A*ₒᵤₜ₂(t)) resulting from the operations of normalisation (88) and synchronization (88);
and wherein the step of comparing (90) comprises the step of comparing (90) said first and said second output signal (*A*_{rof2}(t), *A*ₒᵤₜ₂(t)).

## Patentansprüche

1. Kombination eines Prüfsystems (1) für ein Fahrzeugereignisaufzeichnungsgerät (DUT, 9), das dafür konfiguriert ist, einen durch einen Verkehrsunfall verursachten Aufprall zu identifizieren und aufzuzeichnen, und des Fahrzeugereignisaufzeichnungsgeräts (DUT, 9); wobei das Ereignisaufzeichnungsgerät (DUT, 9) mit zumindest einem Beschleunigungsmesser versehen und dafür konfiguriert ist, eine gemessene Beschleunigung (Aₒᵤₜ(t)) zu detektieren, wobei das Prüfsystem aufweist:
eine Datenbank, die eine Vielzahl von Eingabebeschleunigungsprofilen (Aᵢₙ(t)) enthält, wobei jedes Eingabebeschleunigungsprofil einen durch einen Verkehrsunfall verursachten Aufprall repräsentiert;
ein Steuerungssystem (7), das dafür konfiguriert ist, zumindest ein aus der Vielzahl von Eingabebeschleunigungsprofilen ausgewähltes Eingabebeschleunigungsprofil (Aᵢₙ(t)) zu erfassen (78);
eine bewegliche Plattform (22), die unter der Beschleunigungskraft eines Betätigungssystems (2) steht und mit einem Träger (3; 43) versehen ist, der dafür konfiguriert ist, das Ereignisaufzeichnungsgerät (DUT, 9) stabil zu tragen;
wobei das Steuerungssystem (7) dafür konfiguriert ist, das ausgewählte Eingabebeschleunigungsprofil (Aᵢₙ(t)) in ein Positionsprofil (Pᵢₙ(t)) umzuwandeln und das Betätigungssystem (2) zu steuern, um die bewegliche Plattform (22) gemäß dem Positionsprofil (Pᵢₙ(t)) zu bewegen;
einen auf dem Träger (3; 43) angeordneten Referenzsensor (4), der dafür konfiguriert ist, eine Referenzbeschleunigung (A_{ref}(t)) während eines Bewegungsvorgangs der beweglichen Plattform (22) zu detektieren;
wobei das Steuerungssystem (7) ferner dafür konfiguriert ist, die Referenzbeschleunigung (A_{ref}(t)) mit der durch das Ereignisaufzeichnungsgerät (DUT, 9) detektierten gemessenen Beschleunigung (Aₒᵤₜ(t)) während des Bewegungsvorgangs der beweglichen Plattform (22) zu vergleichen.

2. Kombination nach Anspruch 1, wobei das Betätigungssystem (2) einen mit Aktuatoren versehenen Manipulator aufweist und wobei der Bewegungsvorgang der beweglichen Plattform (22) durch den Manipulator ausgeführt wird.

3. Kombination nach Anspruch 1, wobei das Betätigungssystem (2) einen mit mehreren Aktuatoren versehenen mehrachsigen Prüfstand aufweist und wobei der Bewegungsvorgang der beweglichen Plattform (22) durch den mehrachsigen Prüfstand ausgeführt wird.

4. Kombination nach Anspruch 1, wobei das Betätigungssystem (2) einen Delta-Roboter aufweist und wobei der Bewegungsvorgang der beweglichen Plattform (22) durch den Delta-Roboter ausgeführt wird.

5. Kombination nach einem der vorhergehenden Ansprüche, wobei das ausgewählte Eingabebeschleunigungsprofil (Aᵢₙ(t)) eine erste Abtastfrequenz (fᵢₙ) aufweist und wobei das Steuerungssystem (7) ferner dafür konfiguriert ist:
ein ausgewähltes Eingabebeschleunigungsprofil (Aᵢₙ(t)) zu empfangen (50), wobei das ausgewählte Eingabebeschleunigungsprofil (Aᵢₙ(t)) numerische Werte aufweist, geordnet nach sukzessiven Abtastmomenten, die aus der ersten Abtastfrequenz (fᵢₙ) erhalten werden;
ein Zwischenbeschleunigungsprofil (Aₜₑₘₚ(t)) mit einer zweiten Abtastfrequenz (f_{act}) zu erzeugen (52);
das Eingabebeschleunigungsprofil (Aᵢₙ(t)) so zu modifizieren, dass die erste Abtastfrequenz (fᵢₙ) gleich der zweiten Abtastfrequenz (f_{act}) ist;
das Zwischenbeschleunigungsprofil (Aₜₑₘₚ(t)) zu integrieren (54), um ein Zwischengeschwindigkeitsprofil (vₜₑₘₚ(t)) zu berechnen;
das Zwischengeschwindigkeitsprofil (vₜₑₘₚ(t)) zu integrieren (56), um ein Zwischenpositionsprofil (Pₜₑₘₚ(t)) zu berechnen; und
ein komplettes Beschleunigungs- (Aᵢₙ₂(t)), Geschwindigkeits- (Vᵢₙ(t)) und Positionsprofil (Pᵢₙ(t)) zu erzeugen (58), ausgehend von der Zwischenbeschleunigung (Aₜₑₘₚ(t)), der Zwischengeschwindigkeit (Vₜₑₘₚ(t)) bzw. der Zwischenposition (Ptemp(t));
wobei das Zwischenpositionsprofil (Pₜₑₘₚ(t)) erweitert und vervollständigt wird, indem in zeitlicher Hinsicht eine Trajektorie sukzessiv dazu hinzugefügt wird, die dafür geeignet ist, die Bewegung des Betätigungssystems (2) in gesteuerter Weise zu stoppen; und wobei
die Trajektorie eine Abbremsung bereitstellt, die aus den Beschleunigungs-, Geschwindigkeits- und Positionswerten zum letzten Zeitpunkt der Zwischenbeschleunigungs-(Aₜₑₘₚ(t)), Zwischengeschwindigkeits- (Vₜₑₘₚ(t)) bzw. Zwischenpositionsprofile (Pₜₑₘₚ(t)) berechnet wird.

6. Kombination nach Anspruch 5, wobei das Steuerungssystem (7) ferner dafür konfiguriert ist, eine Streckung mit einer Null-Beschleunigung zwischen dem Zwischenbeschleunigungsprofil (Aₜₑₘₚ(t)) und dem Beginn der Trajektorie bereitzustellen.

7. Kombination nach einem der vorhergehenden Ansprüche, wobei der Träger (3; 43) dafür konfiguriert ist, zumindest eine stabile und voreingestellte räumliche Anordnung zwischen dem Referenzsensor (4), dem Ereignisaufzeichnungsgerät (9) und der beweglichen Plattform (22) bereitzustellen.

8. Kombination nach Anspruch 7, wobei der Träger (3; 43) dafür konfiguriert ist, auf einstellbare Weise eine Vielzahl voreingestellter stabiler Positionen zwischen dem Referenzsensor (4), dem Ereignisaufzeichnungsgerät (9) und der beweglichen Plattform (22) bereitzustellen.

9. Kombination nach Anspruch 7 oder 8, wobei der Träger (3) eine Trägerplatte (34) aufweist, die auf einer ersten Oberfläche mit lösbaren Fixiermitteln für das Ereignisaufzeichnungsgerät (9) versehen ist, wobei der Referenzsensor (4) von der Trägerplatte getragen wird und auf der ersten Oberfläche angeordnet ist, wobei die Trägerplatte auf einer der ersten Oberfläche entgegengesetzten zweiten Oberfläche mit Mitteln für eine Verbindung mit der beweglichen Plattform (22) versehen ist.

10. Kombination nach Anspruch 7 oder 8, wobei der Träger (43) einen Käfig (44) aufweist, der einen internen Hohlraum definiert, der durch zumindest eine Öffnung von außen zugänglich ist; und eine Halterung (46), die von zumindest einer Oberfläche (44a-44c) des Käfigs (44) getragen wird und mit einer Trägerwand (46b) versehen ist, die in Bezug auf die zumindest eine Oberfläche unter einem ersten spitzen Winkel (α) geneigt ist, wobei die Trägerwand (46b) mit lösbaren Fixiermitteln für das Ereignisaufzeichnungsgerät (9) versehen ist, wobei der Referenzsensor (4) vom Käfig (44) getragen wird.

11. Kombination nach Anspruch 10, wobei lösbare Fixiermittel (48) zwischen der Halterung (46) und der zumindest einen Oberfläche (44a-44c) vorgesehen sind, die dafür geeignet sind, eine Demontage der Halterung (46) zu ermöglichen und sie durch eine andere Halterung zu ersetzen, die dafür geeignet ist, nach einer Montage einen Winkel bereitzustellen, der sich von dem von der vorher eingesetzten Halterung (46) bereitgestellten ersten spitzen Winkel (α) unterscheidet.

12. Kombination nach Anspruch 10 oder 11, wobei eine Vielzahl von Löchern (52a-52c) zwischen der zumindest einen Oberfläche (44a-44c) und der Halterung (46) angeordnet vorgesehen und dafür geeignet ist, eine Vielzahl voreingestellter Winkelpositionen der Halterung in Bezug auf die zumindest eine Oberfläche zu ermöglichen, um so die relative Winkelorientierung des Ereignisaufzeichnungsgerät (9) in Bezug auf die bewegliche Plattform (22) zu steuern.

13. Kombination nach einem der vorhergehenden Ansprüche, wobei das Steuerungssystem (7) außerdem dafür konfiguriert ist:
die gemessene Beschleunigung (Aₒᵤₜ(t)) und die Referenzbeschleunigung (A_{ref}(t)) zu normieren (88), um sie auf ein und derselben Zeitskala vergleichbar zu machen;
die gemessene Beschleunigung (Aₒᵤₜ(t)) und die Referenzbeschleunigung (A_{ref}(t)) zu synchronisieren (88), so dass sie miteinander ausgerichtete jeweilige Zeitfenster aufweisen;
ein erstes Ausgangssignal (A_{ref}(t)) und ein zweites Ausgangssignal (Aₒᵤₜ(t)) zu erhalten (88), die sich aus den Operationen der Normierung (88) und Synchronisierung (88) ergeben;
wobei das Steuerungssystem (7) außerdem dafür konfiguriert ist, das erste und das zweite Ausgangssignal (A_{ref}(t)), Aₒᵤₜ₂(t)) zu vergleichen (90).

14. Prüfverfahren für ein Fahrzeugereignisaufzeichnungsgerät (DUT, 9) für Fahrzeuge, das dafür konfiguriert ist, einen durch einen Verkehrsunfall verursachten Aufprall zu identifizieren und aufzuzeichnen, wobei das Ereignisaufzeichnungsgerät mit zumindest einem Beschleunigungsmesser versehen und dafür konfiguriert ist, eine gemessene Beschleunigung (Aₒᵤₜ(t)) zu detektieren, wobei das Verfahren die Schritte aufweist:
Auswählen (78) zumindest eines Eingabebeschleunigungsprofils (Aᵢₙ(t)) aus einer Datenbank, die eine Vielzahl von Beschleunigungsprofilen (Aᵢₙ(t)) enthält, die jeweils einen durch einen Verkehrsunfall verursachten Aufprall repräsentieren;
Erfassen (78) des zumindest einen aus der Vielzahl von Eingabebeschleunigungsprofilen ausgewählten Eingabebeschleunigungsprofils (Aᵢₙ(t)) bei einem Steuerungssystem (7);
Fixieren (77) des Ereignisaufzeichnungsgeräts (9) stabil auf einem Träger (3; 43), der von einer beweglichen Plattform (22) unter der Beschleunigungskraft eines Betätigungssystems (2) getragen wird;
Umwandeln des ausgewählten Eingabebeschleunigungsprofils (Aᵢₙ(t)) in ein Positionsprofil (Pᵢₙ(t));
Bewegen (84) der beweglichen Plattform (22) gemäß dem ausgewählten Eingabepositionsprofil (Pᵢₙ(t));
Detektieren (86), mittels eines auf der beweglichen Plattform angeordneten Referenzsensors (4), einer Referenzbeschleunigung (A_{ref}(t)) und der durch das Ereignisaufzeichnungsgerät (9) detektierten gemessenen Beschleunigung während des Schritts zum Bewegen der beweglichen Plattform;
Vergleichen (90) der Referenzbeschleunigung (A_{ref}(t)) mit der gemessenen Beschleunigung (Aₒᵤₜ(t)).

15. Verfahren nach Anspruch 14, wobei das ausgewählte Eingabebeschleunigungsprofil (Aᵢₙ(t)) eine erste Abtastfrequenz (fᵢₙ) aufweist und wobei der Umwandlungsschritt die Schritte aufweist:
Erzeugen (52) eines Zwischenbeschleunigungsprofils (Aₜₑₘₚ(t)) mit einer zweiten Abtastfrequenz (fact), wobei das ausgewählte Beschleunigungsprofil so modifiziert wird, dass die erste Abtastfrequenz gleich der zweiten Abtastfrequenz ist;
Berechnen (54) eines Zwischengeschwindigkeitsprofils (Vtemp(t)), indem das Zwischenbeschleunigungsprofil integriert wird;
Berechnen (56) eines Zwischenpositionsprofils (Ptemp(t)), indem das Zwischengeschwindigkeitsprofil integriert wird;
Erzeugen (58) eines kompletten Beschleunigungs- (Aᵢₙ₂(t)), Geschwindigkeits- (Vᵢₙ (t)) und Positionsprofils (Pᵢₙ(t)), ausgehend von der Zwischenbeschleunigung (Aₜₑₘₚ(t)), der Zwischengeschwindigkeit (Vₜₑₘₚ(t)) bzw. der Zwischenposition (Ptemp(t)); wobei das Zwischenpositionsprofil (Pₜₑₘₚ(t)) erweitert und vervollständigt wird, indem in zeitlicher Hinsicht eine Trajektorie sukzessiv dazu hinzugefügt wird, die dafür geeignet ist, die Bewegung des Betätigungssystems (2) in gesteuerter Weise zu stoppen; und wobei
die Trajektorie eine berechnete Abbremsung ausgehend von den Beschleunigungs-, Geschwindigkeits- und Positionswerten zum letzten Zeitpunkt der Zwischenbeschleunigungs- (Aₜₑₘₚ(t)), Zwischengeschwindigkeits- (Vₜₑₘₚ(t)) bzw. Zwischenpositionsprofile (Pₜₑₘₚ(t)) bereitstellt.

16. Verfahren nach Anspruch 15, wobei der Schritt zum Erzeugen (58) des kompletten Beschleunigungsprofils (Aᵢₙ₂(t)) außerdem den Schritt zum Hinzufügen einer Streckung mit einer Null-Beschleunigung zwischen dem Ende des Zwischenbeschleunigungsprofils (Aₜₑₘₚ(t)) und dem Beginn der Trajektorie aufweist.

17. Verfahren nach einem der vorhergehenden Ansprüche 15 bis 16, außerdem aufweisend die Schritte:
Normieren (88) der gemessenen Beschleunigung (Aₒᵤₜ(t)) und der Referenzbeschleunigung (A_{ref}(t)), so dass die beiden Beschleunigungen auf ein und derselben Zeitskala vergleichbar sind;
Synchronisieren (88) der gemessenen Beschleunigung (Aₒᵤₜ(t)) und der Referenzbeschleunigung (A_{ref}(t)), so dass sie miteinander ausgerichtete jeweilige Zeitfenster aufweisen;
Erzeugen (88) eines ersten Ausgangssignals (A_{ref2}(t)) und eines zweiten Ausgangssignals (Aₒᵤₜ₂(t)), die sich aus den Operationen der Normierung (88) und Synchronisierung (88) ergeben;
und wobei der Schritt zum Vergleichen (90) den Schritt zum Vergleichen (90) des ersten und des zweiten Ausgangssignals (A_{ref2}(t)), Aₒᵤₜ₂(t)) aufweist.

## Revendications

1. Une combinaison d'un système de test (1) pour un enregistreur d'événements de véhicule (DUT, 9) configuré pour identifier et enregistrer un impact provoqué par un accident de la route, et l'enregistreur d'événements de véhicule (DUT, 9), ledit enregistreur d'événements (DUT, 9) étant pourvu d'au moins un accéléromètre et configuré pour détecter une accélération mesurée (Aₒᵤₜ(t)) ; ledit système de test comprenant :
- une base de données, contenant une pluralité de profils d'accélération d'entrée (Aᵢₙ(t)), chaque profil d'accélération d'entrée représentant un choc provoqué par un accident de la route ;
- un système de commande (7), configuré pour acquérir (78) au moins un profil d'accélération d'entrée (Ain(t)) sélectionné parmi ladite pluralité de profils d'accélération d'entrée ;
- une plate-forme mobile (22) étant sous la poussée d'un système d'actionnement (2) et pourvue d'un support (3 ; 43) configuré pour supporter de manière stable ledit enregistreur d'événements (DUT, 9) ;
ledit système de commande (7) configuré pour convertir ledit profil d'accélération d'entrée sélectionné (Aᵢₙ(t)) en un profil de position (Pᵢₙ(t)) et commander ledit système d'actionnement (2) pour déplacer ladite plate-forme mobile (22) selon ledit profil de position (Pᵢₙ(t)) ;
- un capteur de référence (4) agencé sur ledit support (3 ; 43), configuré pour détecter une accélération de référence (A_{ref}(t)) pendant une opération de déplacement de ladite plate-forme mobile (22) ; ledit système de commande (7) étant en outre configuré pour comparer ladite accélération de référence (A_{ref}(t)) à ladite accélération mesurée (Aₒᵤₜ(t)), détectée par ledit enregistreur d'événements (DUT, 9), pendant ladite opération de déplacement de la plate-forme mobile (22).

2. Combinaison selon la revendication 1, dans laquelle ledit système d'actionnement (2) comprend un manipulateur pourvu d'actionneurs, et dans laquelle ladite opération de déplacement de ladite plate-forme mobile (22) est effectuée par ledit manipulateur.

3. Combinaison selon la revendication 1, dans laquelle ledit système d'actionnement (2) comprend un banc multiaxial muni d'actionneurs, et dans laquelle ladite opération de déplacement de la plate-forme mobile (22) est effectuée par ledit banc multiaxial.

4. Combinaison selon la revendication 1, dans laquelle ledit système d'actionnement (2) comprend un robot delta, et dans laquelle ladite opération de déplacement de la plate-forme mobile (22) est effectuée par ledit robot delta.

5. Combinaison selon l'une quelconque des revendications précédentes, dans laquelle ledit profil d'accélération d'entrée sélectionné (Aᵢₙ(t)) a une première fréquence d'échantillonnage (fᵢₙ) et dans laquelle ledit système de commande (7) est en outre configuré pour :
- recevoir (50) ledit profil d'accélération d'entrée sélectionné (Aᵢₙ(t)), ledit profil d'accélération d'entrée sélectionné (Aᵢₙ(t)) comprenant des valeurs numériques ordonnées par des instants d'échantillonnage successifs obtenus à partir de ladite première fréquence d'échantillonnage (fᵢₙ) ;
- générer (52) un profil d'accélération intermédiaire (Aₜₑₘₚ(t)) ayant une seconde fréquence d'échantillonnage (f_{act}) ;
- modifier ledit profil d'accélération d'entrée (Aᵢₙ(t)), de sorte que ladite première fréquence d'échantillonnage (fᵢₙ) soit égale à ladite seconde fréquence d'échantillonnage (f_{act}) ;
- intégrer (54) ledit profil d'accélération intermédiaire (Aₜₑₘₚ(t)) pour calculer un profil de vitesse intermédiaire (vₜₑₘₚ(t)) ;
- intégrer (56) ledit profil de vitesse intermédiaire (vₜₑₘₚ(t)) pour calculer un profil de position intermédiaire (Pₜₑₘₚ(t)) ; et
- générer (58) un profil complet d'accélération (Aᵢₙ₂(t)), de vitesse (Vᵢₙ(t)) et de position (Pᵢₙ(t)) à partir des profils intermédiaires d'accélération (Aₜₑₘₚ(t)), de vitesse (vₜₑₘₚ(t)) et de position (Pₜₑₘₚ(t)) respectivement ;
dans laquelle le profil de position intermédiaire (Pₜₑₘₚ(t)) est étendu et complété par ajout successif, en termes temporels, d'une trajectoire adaptée pour arrêter de déplacement du système d'actionnement (2) de manière contrôlée ; et dans laquelle ladite trajectoire fournit une décélération calculée à partir des valeurs d'accélération, de vitesse et de position au dernier instant desdits profils intermédiaires d'accélération (Aₜₑₘₚ(t)), de vitesse (vₜₑₘₚ(t)) et de position (Pₜₑₘₚ(t)), respectivement.

6. Combinaison selon la revendication 5, dans laquelle ledit système de commande (7) est en outre configuré pour fournir un tronçon avec une accélération nulle entre le profil d'accélération intermédiaire (Atemp(t)) et le début de ladite trajectoire.

7. Combinaison selon l'une quelconque des revendications précédentes, dans laquelle ledit support (3 ; 43) est configuré pour fournir au moins un agencement spatial stable et prédéfini entre ledit capteur de référence (4), ledit enregistreur d'événements (9) et ladite plate-forme mobile (22).

8. Combinaison selon la revendication 7, dans laquelle ledit support (3 ; 43) est configuré pour fournir, de manière réglable, une pluralité de positions stables prédéfinies entre ledit capteur de référence (4), ledit enregistreur d'événements (9) et ladite plateforme mobile (22).

9. Combinaison selon la revendication 7 ou 8, dans laquelle ledit support (3) comprend une plaque de support (34) pourvue, sur une première face, de moyens de fixation de type amovible pour ledit enregistreur d'événements (9), ledit capteur de référence (4) étant supporté par ladite plaque de support et agencé sur ladite première face, ladite plaque de support étant pourvue, sur une seconde face opposée à ladite première face, de moyens de liaison à ladite plate-forme mobile (22).

10. Combinaison selon la revendication 7 ou 8, dans laquelle ledit support (43) comprend une cage (44) définissant une cavité interne accessible de l'extérieur par au moins une ouverture ; et un support (46) porté par au moins une face (44a-44c) de ladite cage (44) et pourvu d'une paroi de support (46b) inclinée par rapport à ladite au moins une face d'un premier angle aigu (a), ladite paroi de support (46b) étant munie de moyens de fixation de type amovible pour ledit enregistreur d'événements (9), ledit capteur de référence (4) étant porté par ladite cage (44).

11. Combinaison selon la revendication 10, dans laquelle les moyens de fixation de type amovible (48) sont prévus entre ledit support (46) et ladite au moins une face (44a-44c) qui sont adaptés pour permettre le retrait dudit support (46) et le remplacement par un autre support adapté pour fournir, lorsqu'il est monté, un angle différent du premier angle aigu (a) fourni par le support précédemment inséré (46).

12. Combinaison selon la revendication 10 ou 11, dans laquelle une pluralité d'orifices (52a-52c) est prévu interposé entre ladite au moins une face (44a-44c) et ledit support (46) et adapté pour permettre une pluralité de positions angulaires pré-réglées dudit support par rapport à ladite au moins une face, de manière à contrôler l'orientation angulaire relative de l'enregistreur d'événements (9) par rapport à ladite plate-forme mobile (22).

13. Combinaison selon l'une quelconque des revendications précédentes, dans laquelle ledit système de contrôle (7) est en outre configuré pour :
- normaliser (88) ladite accélération mesurée (Aₒᵤₜ(t)) et ladite accélération de référence (A_{ref}(t)) de manière à les rendre comparables sur une même échelle de temps ;
- synchroniser (88) ladite accélération mesurée (Aₒᵤₜ(t)) et ladite accélération de référence (A_{ref}(t)) pour qu'elles aient des fenêtres temporelles respectives alignées l'une sur l'autre ;
- obtenir (88) un premier signal de sortie (A_{ref}(t)) et un second signal de sortie (Aₒᵤₜ(t)) résultant des opérations de normalisation (88) et de synchronisation (88) ;
le système de commande (7) étant en outre configuré pour comparer (90) ledit premier et ledit deuxième signal de sortie (A_{ref}(t)), (Aₒᵤₜ₂(t)).

14. Procédé de test d'un enregistreur d'événements pour véhicules (DUT, 9) configuré pour identifier et enregistrer un impact causé par un accident de la route, ledit enregistreur d'événements étant pourvu d'au moins un accéléromètre configuré pour détecter une accélération mesurée (Aₒᵤₜ(t)), ledit procédé comprenant les étapes de :
- sélectionner (78) dans une base de données contenant une pluralité de profils d'accélération, représentant chacun un choc provoqué par un accident de la route, au moins un profil d'accélération d'entrée (Aᵢₙ(t)) ;
- acquérir (78) le au moins un profil d'accélération d'entrée (Aᵢₙ(t)) sélectionné parmi ladite pluralité de profils d'accélération d'entrée dans un système de commande (7)
- fixer (77) ledit enregistreur d'événements (9) de manière stable sur un support (3 ; 43) porté par une plate-forme mobile (22) sous la poussée d'un système d'actionnement (2) ;
- convertir ledit profil d'accélération (Aᵢₙ(t)) sélectionné en un profil de position (Pᵢₙ(t)) ;
- déplacer (84) ladite plateforme mobile (22) selon le profil de position d'entrée (Pᵢₙ(t)) sélectionné ;
- détecter (86) au moyen d'un capteur de référence (4), agencé sur ladite plate-forme mobile, une accélération de référence (A_{ref}(t)) et ladite accélération mesurée détectée par l'enregistreur d'événements (9) lors de l'étape de déplacement de ladite plate-forme mobile ;
- comparer (90) ladite accélération de référence (A_{ref}(t)) à ladite accélération mesurée (Aₒᵤₜ(t)).

15. Procédé selon la revendication 14, dans lequel ledit profil d'accélération d'entrée sélectionné (Aᵢₙ(t)) a une première fréquence d'échantillonnage (fᵢₙ) et dans lequel ladite étape de conversion comprend les étapes de :
- générer (52) un profil d'accélération intermédiaire (Aₜₑₘₚ(t)), ayant une seconde fréquence d'échantillonnage (f_{act}), dans lequel ledit profil d'accélération sélectionné est modifié de sorte que ladite première fréquence d'échantillonnage est égale à ladite seconde fréquence d'échantillonnage ;
- calculer (54) un profil de vitesse intermédiaire (vₜₑₘₚ(t)) en intégrant ledit profil d'accélération intermédiaire ;
- calculer (56) un profil de position intermédiaire (Pₜₑₘₚ(t)) en intégrant ledit profil de vitesse intermédiaire ;
- générer (58), des profils complets d'accélération (Aᵢₙ₂(t)), de vitesse (Vᵢₙ(t)) et de position (Pᵢₙ(t)), à partir des profils intermédiaires d'accélération (Aₜₑₘₚ(t)), de vitesse (vₜₑₘₚ(t)) et de position (Pₜₑₘₚ(t)) respectivement ; dans lequel le profil de position intermédiaire (Pₜₑₘₚ(t)) est étendu et complété par ajout successif, en termes temporels, d'une trajectoire adaptée pour arrêter de déplacement du système d'actionnement (2) de manière contrôlée ; et dans lequel ladite trajectoire fournissant une décélération calculée commençant à partir des valeurs d'accélération, de vitesse et de position au dernier instant desdits profils intermédiaires d'accélération (Aₜₑₘₚ(t)), de vitesse (vₜₑₘₚ(t)) et de position (Pₜₑₘₚ(t)), respectivement.

16. Procédé selon la revendication 15, dans lequel l'étape de génération (58) du profil d'accélération complet (Aᵢₙ₂(t)) comprend en outre l'étape d'ajout d'un tronçon avec une accélération nulle entre la fin dudit profil d'accélération intermédiaire (Aₜₑₘₚ(t)) et le début de ladite trajectoire.

17. Procédé selon l'une quelconque des revendications 15 à 16, comprenant en outre les étapes de :
- normaliser (88) ladite accélération mesurée (Aₒᵤₜ(t)) et ladite accélération de référence (A_{ref}(t)) pour que les deux accélérations soient comparables sur une même échelle de temps ;
- synchroniser (88) ladite accélération mesurée (Aout(t)) et ladite accélération de référence (A_{ref}(t)) pour qu'elles aient des fenêtres temporelles respectives alignées l'une sur l'autre ;
- générer (88) un premier signal de sortie (A_{ref2}(t)) et un second signal de sortie (Aₒᵤₜ2(t)) résultant des opérations de normalisation (88) et de synchronisation (88) ;
et dans lequel l'étape de comparaison (90) comprend l'étape de comparaison (90) dudit premier et dudit second signal de sortie (A_{ref2}(t), Aₒᵤₜ₂(t)).
